Europäisches Patentamt

European Patent Office

Office européen des brevets

(11) Numéro de publication: **0 229 543 B1**

(12) **FASCICULE DE BREVET EUROPEEN**

(45) Date de publication de fascicule du brevet: **03.06.92**　(51) Int. Cl.⁵: **G06F 15/68**

(21) Numéro de dépôt: **86402551.5**

(22) Date de dépôt: **18.11.86**

(54) **Procédé de pontage entre éléments de contours dans une image.**

(30) Priorité: **26.11.85 FR 8517476**

(43) Date de publication de la demande:
**22.07.87 Bulletin 87/30**

(45) Mention de la délivrance du brevet:
**03.06.92 Bulletin 92/23**

(84) Etats contractants désignés:
**DE NL**

(56) Documents cités:

**COMPUTER GRAPHICS AND IMAGE PROCESSING, vol. 5, no. 4, décembre 1976, pages 425-446, Academic press, Inc., New York, US; E. PERSOON: "A new edge detection algorithm and its applications in picture processing"**

**PROCEEDINGS OF THE IEEE COMPUTER SOCIETY CONFERENCE PATTERN RECOGNITION AND IMAGE PROCESSING, Las Vegas, Nevada, US, 14-17 Juin 1982, pages 358-361, IEEE, New York, US; D. JUVIN et al.: "Anima (ANalyses of IMAges) a quasi real time system"**

**IEEE PROCEEDINGS OF THE CONFERENCE**

**ON PATTERN RECOGNITION AND IMAGE PROCESSING, New York, US, 6-8 Juin 1977, pages 216-224, IEEE Inc., Long Beach, US; G.P. ASHKAR et al.: "The contour extraction problem with biomedical applications"**

**IEEE TRANSACTIONS ON MEDICAL IMAGING, vol. MI-4, no. 2, juin 1985, pages 72-78, IEEE, New York, US; P. GRATTONI et al.: "Contour detection of the left ventricular cavity from angiographic images"**

(73) Titulaire: **THOMSON-CSF**
**51, Esplanade du Général de Gaulle**
**F-92800 Puteaux(FR)**

(72) Inventeur: **Catros, Jean-Yves**
**THOMSON-CSF SCPI 19, avenue de Messine**
**F-75008 Paris(FR)**
Inventeur: **Malo-Renault, François**
**THOMSON-CSF SCPI 19, avenue de Messine**
**F-75008 Paris(FR)**

(74) Mandataire: **Lincot, Georges et al**
**THOMSON-CSF SCPI**
**F-92045 PARIS LA DEFENSE CEDEX 67(FR)**

## Description

La présente invention concerne un procédé de pontage entre éléments de contours dans une image. Elle s'applique notamment à la reconnaissance des vaisseaux en angiographie numérique mais peut également s'appliquer à l'analyse des vues aériennes pour la reconnaissance des fleuves et des routes.

L'angiographie est un procédé qui Permet une analyse visuelle de vaisseaux sanguins. Son principe consiste à radiographier la zone d'observation avant puis après l'injection d'un produit opaque aux rayons X. La différence logarithmique de ces deux images permet, s'il n'y pas eu mouvement entre les deux prises de vue, d'obtenir une image bien contrastée des zones du réseau vasculaire où le produit a diffusé. Le support de l'image est formé en angiographie numérique par une mémoire numérique d'images qui permet une analyse pratiquement en temps réel des zones observées du réseau vasculaire. Des méthodes d'analyse correspondantes sont par exemple décrites dans les articles : PROCEEDINGS OF THE IEEE COMPUTER SOCIETY CONFERENCE PATTERN RECOGNITION AND IMAGE PROGRESSING, Las Vegas, Nevada, US, 14-17 Juin 1982, pages 358-361, IEEE, New York, US; D. JUVIN et al. : "Anima (ANalyses of IMAges) a quasi real time system", et COMPUTER GRAPHICS AND IMAGE PROCESSING, vol. 5, n° 4, décembre 1976, pages 425-446, Academic press, Inc., New York, US ; E. PERSOON : "A new edge detection algorithm and its applications in picture processing". Seulement les lignes de contour du reseau vasculaire sont restituées de façon discontinue à cause notamment des seuils utilisés dans les méthodes d'extraction de contours. Il faut par conséquent déterminer si ces discontinuités sont dues à une absence réelle de contours ou si au contraire elles ne sont pas causées par un minimum local du gradient de luminance.

Les procédés connus se basent généralement sur des considérations de proximité ou d'orientation aux extrémités des lignes de contours susceptibles d'être pontées, mais celles-ci sont encore imprécises et ne permettent pas de renseigner avec suffisamment de certitude sur la présence ou sur l'absence reele des discontinuités dans le réseau vasculaire.

Le but de l'invention est de pallier les inconvénients précités.

A cet effet, l'invention a pour objet, un procédé de pontage en imagerie numérique entre éléments de contours disjoints d'une image numérique emmagasinés dans une mémoire numérique, obtenus par un suivi de points de l'image ayant un gradient de luminance contrasté par rapport à un niveau de seuil prédéterminé, caractérisé par la recherche d'un chemin optimal de pontage entre les extrémités en regard des éléments de contours disjoints ladite fenêtre (F) étant définie au moyen d'un carré de côté D égal à la distance séparant lesdits points A et B et orienté dans le plan de sorte que les points A et B soient disposés sur deux côtés opposés du carré au milieu de ceux-ci, et consistant : à définir une fenêtre de recherche entre chacune des extrémités en regard des éléments de contours disjoints, à considérer dans la fenêtre les différents points d'image comme des noeuds dans un graphe, à déterminer un coût élémentaire associé à chaque chemin reliant chaque noeud à ses noeuds voisins à partir des informations d'amplitude et d'orientation de la fonction de luminance utilisée pour détecter les contours, et à déterminer le chemin optimal en suivant à partir des coûts obtenus une ligne de coûts minimum pour laquelle le gradient de luminance des points détectés apparaît maximal, chaque coût élémentaire $c_{ij}$ pour aller d'un noeud i à un noeud j de la fenêtre étant défini par une relation du type

$$C_{ij} = Max- a_j$$

où Max désigne l'amplitude maximum du gradient dans la fenêtre (F) et $a_j$ désigne l'amplitude du gradient au noeud j.

L'invention a principalement pour avantage qu'elle permet à la fois d'associer un facteur de confiance à chaque pontage effectué et de favoriser une forme de chemin particulière en agissant sur les fonctions de coûts associées à chaque arc du graphe.

D'autres caractéristiques et avantages de l'invention apparaîtront ci-après à l'aide de la description qui va suivre faite en regard des dessins annexés qui représentent :

- la figure 1 une fenêtre de recherche définie à partir de deux extrémités d'un contour à ponter ;
- les figures 2A et 2B des graphes formés de points d'image disposés à l'intérieur de la fenêtre de recherche ;
- la figure 3 un organigramme retraçant les étapes du procédé employé par l'invention pour calculer un chemin optimal entre des points du graphe à ponter ;
- la figure 4 un exemple d'application du procédé de pontage selon l'invention.

En imagerie numérique les procédés de détection de contours se déroulent généralement en deux phases de traitement principales, l'une consistant à définir, à partir d'une image numérique où chaque point d'image est codé par exemple sur huit bits, une autre image plus caractéristique des contours recherchés à l'aide d'un processus de filtrage, l'autre consistant à adopter des seuils pour l'image obtenue et à effectuer des opérations binaires sur l'image ainsi seuillée, pour détecter les zones connexes, les amincir et obtenir des segments par approximation linéaire des contours.

Les contours obtenus présentent cependant des discontinuités, et il peut être intéressant de combler celles-ci lorsque l'information de contours réelle est manquante ou inexistante. Pour combler une discontinuité, un pontage peut par exemple être effectué directement sur l'image binaire en prenant en considération certains critères tels que la longueur de celle-ci et/ou celui des angles formés par les directions des lignes de contour situées de part et d'autre de celle-ci.

L'inconvénient de ces procédés est qu'ils exécutent des traitements sur des données binaires réduites, et que beaucoup d'informations, qui seraient très utiles pour aider à prendre une décision correcte, sont perdues.

Un autre procédé décrit dans l'article du CGIP1 pages 169 à 182 de 1972 ayant pour titre "Martelli Edge Detection Using Heuristic Search Methods" se base sur une heuristique de recherche de chemins dans une image de luminance, et permet de détecter des contours dans des zones d'image déterminées. Le procédé de pontage selon l'invention reprend certains principes du procédé décrit dans cet article. Mais il s'en distingue essentiellement du fait de son adaptation au problème spécifique de pontage de l'invention et par le fait que d'une part, il utilise comme données de départ celles figurant les niveaux de gris de l'image des amplitudes et/ou des orientations des gradients qui sont déjà calculés pour élaborer l'image des contours et qui représentent de ce fait mieux les contours que les données initiales de luminance et que d'autre part, il met en oeuvre un algorithme de recherche connu sous le nom d'algorithme de Moore-Dijkstra qui apparaît le mieux adapté pour amener une solution à un des problèmes spécifiques posés par l'invention, consistant pour rechercher l'existence d'un contour passant par deux points A et B à ramener ce problème à celui déjà résolu par cet algorithme pour trouver le plus court chemin dans un graphe entre deux sommets.

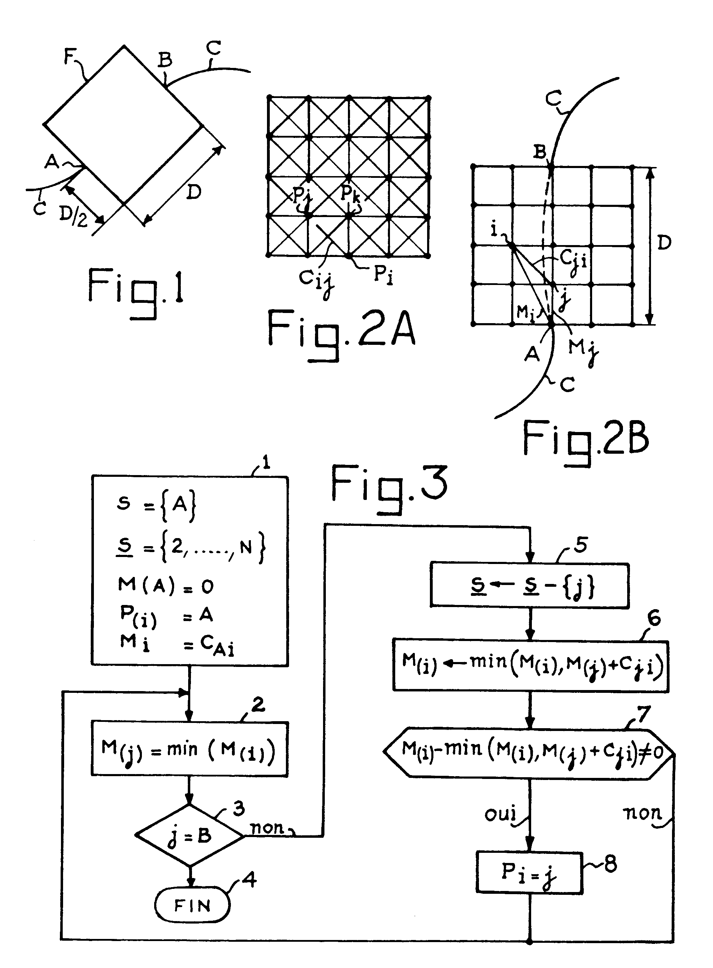

Selon l'invention, si le coût de codage du plus court chemin est inférieur à un seuil donné ce chemin est considéré comme celui correspondant au pontage recherché, sinon il n'y a pas de pontage possible entre les deux points. L'espace de recherche est défini de la manière représentée à la figure 1 où est inséré entre deux points A et B, marquant les extrémités d'une discontinuité dans un contour C de l'image, un carré de côté D égal à la distance séparant les points A et B et orienté dans le plan, pour que les points A et B soient disposés sur deux côtés opposés du carré au milieu de ceux-ci. L'espace de recherche F ainsi défini, forme une fenêtre de recherche qui est entrecroisée sur la figure 2A par des lignes et des colonnes, chaque noeud placé à l'intersection d'une ligne et d'une colonne représentant un point d'image. Sur la figure 2A la fenêtre carrée de recherche est partagée en quatre lignes et quatre colonnes et chaque noeud $P_i$ intérieur à la fenêtre de recherche F est relié à chacun de ses huit voisins $P_j$ par un arc (i,j) auquel est attribué un coût $M_i = C_{ij}$ correspondant au coût associé au passage d'un point $P_i$ à un point voisin $P_j$. Ceci permet en définissant des coûts caractéristiques pour chaque arc sous-tendu entre deux noeuds voisins de calculer un coût global pour déterminer le plus court chemin pour aller du point A au point B.

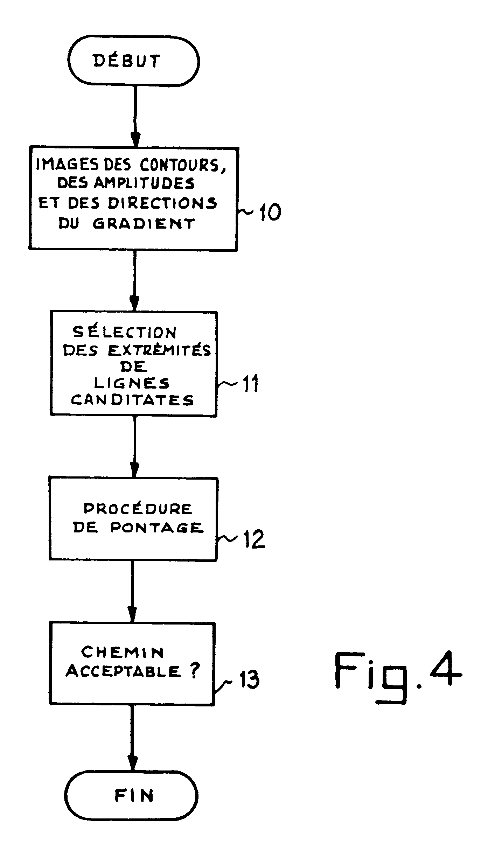

La recherche du plus court chemin s'effectue en appliquant les enseignements de l'algorithme de "Mooer Dijkstra", de la façon décrite ci-après à l'aide de l'organigramme de la figure 3, appliqué à un graphe représenté par un ensemble de sommets (A, 2, ... , N) et un ensemble d'arcs (i, j) affectés d'un coût $C_{ij}$. L'exécution de cet algorithme commence par une phase d'initialisation et se poursuit par une phase de sélection des points du graphe de coût minimum, suivie d'une phase de remise à jour des coûts pour chaque point de coût minimum sélectionné à l'intérieur du graphe. La phase d'initialisation représentée en 1 sur la figure 3 fait démarrer la recherche au sommet S = A en considérant également l'ensemble $\overline{S}$ = (2, ... , N) des pixels ou des points d'image restants de la fenêtre.

Sur la figure 3 M(A) = 0 désigne le coût associé au point A de départ, $M_i = C_{Ai}$ désigne le coût de codage pour parcourir le chemin séparant le point A d'un point i voisin du point A et $P_{(i)}$ un vecteur qui est constitué à chaque point sélectionné du chemin optimal pour permettre de reconstituer ce chemin lorsque toutes les étapes de l'algorithme sont terminées. Durant la phase d'initialisation le vecteur $P_{(i)}$ (prédécesseur de i) est placé égal à $P_{(A)}$ pour désigner le sommet de départ A.

La phase de sélection des coûts minimums s'exécute aux étapes 2 à 5. L'étape 2 consiste à choisir le sommet j appartenant à l'ensemble $\overline{S}$ tel que le coût M(j) soit égal au minimum des coûts (M(i)) quelque soit le sommet i appartenant à l'ensemble $\overline{S}$. Si le minimum des coûts obtenus fait apparaître que le sommet j de coût minimum correspond au sommet B le processus s'arrête à l'étape 4 et le chemin de coût minimum est obtenu à partir du vecteur $P_{(i)}$. Par contre, si le sommet j de coût minimum ne correspond pas au sommet B le processus continue à l'étape 5 par la mise à jour de l'ensemble des sommets $\overline{S}$ en retirant le sommet j de cet ensemble et en effectuant une remise à jour des coûts à l'étape 6, le coût $M_i$ de départ étant mis à jour éventuellement par un coût $M_j +$ $C_{ji}$ égale au coût du point j augmenté du coût $C_{ji}$ du trajet reliant le point i précédent au point j. Cette mise à jour correspondant à la notation sur la figure 3,

$M_{(i)} \leftarrow \min (M_{(i)}, M_{(j)} + C_{ji})$, permet d'effectuer à l'étape 7 un test sur le nouveau coût obtenu et si le nouveau coût obtenu est différent du coût $M_{(i)}$ précédent, alors le vecteur $P_i$ est mis à jour pour désigner à l'étape 8, le sommet j comme prédécesseur du sommet i, sinon le traitement retourne à l'exécution de l'étape 2.

Les coûts élémentaires $C_{ij}$ dépendent de la méthode d'extraction de gradient retenue ainsi que des contraintes qui sont imposées sur la forme du chemin. Dans l'exemple préféré de réalisation de l'invention, la méthode d'extraction de gradient retenue est dérivée de celle qui est proposée par l'article de NEVATA et BABU intitulé "Linear picture edges extraction and description" et paru dans le volume n° 13 de 1980 de la Revue Computer Graphics and Images Processing. Cette méthode utilise plusieurs masques différents en caractérisant chaque élément de contours par une amplitude et une orientation locale de celui-ci. Elle donne de bons résultats pour les problèmes spécifiques de l'angiographie numérique. Il va cependant de soit, que d'autres méthodes d'extraction de contours fournissant une image à niveau de gris caractéristique de ces contours pourraient également s'appliquer au procédé de pontage selon l'invention qui vient d'être décrit.

Les coûts élémentaires $C_{ij}$ pourront dépendre également des contraintes qui pourront être imposées sur la forme du chemin.

Par exemple, dans un premier cas, si l'on cherche à suivre la ligne d'amplitude maximum du gradient pour déterminer la forme du chemin, des coûts élémentaires du type

$C_{ij} = Max - a_j$ pourront être déterminés
où - $C_{ij}$ désigne le coût élémentaire pour aller du sommet i au sommet j

- Max désigne l'amplitude maximum du gradient dans la fenêtre F
- et $a_j$ désigne l'amplitude du gradient au sommet j.

Selon un deuxième cas, pour tenir compte plus spécialement de la forme du chemin, il pourra être profitable d'utiliser l'information d'orientation locale pour faire intervenir dans le coût la forme du chemin désirée. Par exemple, pour favoriser un chemin rectiligne, des coûts élémentaires du type :

$$C_{ij} = Max - a_j + K_1 . |\theta_j - \theta \text{ moyen}|$$

ou encore

$$C_{ij} = Max - \frac{a_j}{K_2.Q}$$

pourront être utilisés avec

$$Q = \frac{1}{K_2}$$

si $\theta_j = \theta$ moyen ou $Q = |\theta_j - \theta$ moyen$|$ si $\theta_j$ différent de $\theta$ moyen

Dans ces formules $\theta_j$ désigne l'orientation locale au sommet j et $\theta$ moyen désigne la moyenne des orientations locales aux sommets A et B.

De la même manière, pour définir un contour régulier, sans brusque changement d'orientation, un coût élémentaire du type

$$C_{ij} = Max - a_j + K_1 . |\theta_j - \theta_i|$$

ou encore

$$C_{ij} = Max - \frac{a_j}{K_2.Q}$$

pourront être utilisés avec

$$Q = \frac{1}{K_2}$$

si $\theta_j = \theta_i$ ou bien $Q = |\theta_i - \theta_j|$ si $\theta_j$ est différent de $\theta_i$.

Une fois que le chemin optimal est trouvé, il faut encore décider de son caractère acceptable ou non. Une première voie consiste à ne retenir le chemin que si le coût rapporté au nombre de points du chemin est inférieur à un seuil prédéterminé. Cette méthode est valable mais la détermination du seuil reste délicate. Il apparaît bien préférable de calculer le long d'un chemin L trouvé un critère de qualité relatif de la forme

$$C_r = \sum_L \frac{A_i x N^{-1}}{a_{max}}$$

$A_i$ = l'amplitude du gradient au point i du chemin corrigé par l'orientation : (Max - $C_{ij}$)
N = le nombre de points sur le chemin
$a_{max}$ = amplitude maximale sur le chemin, points extrémités compris.

Dans ces conditions le pontage sera effectué que si $C_r$ est supérieur à un seuil déterminé exprimé par un pourcentage.

L'exemple qui vient d'être donné d'un mode de réalisation préféré de l'invention n'est pas limitatif, il va de soi que d'autres variantes d'exécution sont également possibles qui dépendront pour la plupart de l'approche utilisée pour définir le système de traitement de l'image sans que pour autant celles-ci s'écartent du cadre même de l'invention revendiquée. Dans le cas par exemple, d'une approche qui serait dirigée avec la volonté d'extraire le maximum d'informations de l'image sans tenir compte du résultat des étapes de traitement haut niveau on pourra rechercher par exemple, à ponter toutes les extrémités des lignes de contours qui satisfont certains critères de proximité. Un algorithme correspondant pourra être dans ce cas du type de celui qui est représenté à la figure 4 aux étapes 10 à 13, commençant à l'étape 10 par le recueil des données initiales constituant les images des contours, des amplitudes et des directions du gradient, pour sélectionner à l'étape 11 les extrémités des lignes de contour candidates si leurs distances sont inférieures par exemple à un seuil et si elles ont une orientation voisine. Dans ce cas, on pourra appliquer aux extrémités sélectionnées le procédé de pontage qui vient d'être décrit et si le test d'accessibilité est vérifié le pont obtenu sera retenu, ou rejeté dans le cas contraire. On remarquera que cette stratégie peut encore être utilisée de deux manières différentes, soit telle qu'elle ou encore de manière itérative. Dans ce dernier cas on bouchera d'abord les trous d'un point, puis de deux points, etc... La méthode la plus intéressante dépendra du type d'image et du temps disponible.

D'autres approches pourront également être dirigées non plus à partir des données mais à partir d'un concept, du type par exemple, connu dans la littérature anglo-saxonne sous la désignation "Top.Down". En effet, la formulation d'une hypothèse sur l'existence d'un objet peut conduire à faire une hypothèse sur la continuité d'un contour. Cette continuité peut par conséquent être vérifiée par le procédé de pontage qui vient d'être décrit de manière à confirmer ou infirmer l'hypothèse. Dans ce cas il sera suffisant d'appliquer simplement le procédé selon l'invention aux extrémités désignées A et B et non à toute l'image comme dans l'approche précédente.

**Revendications**

1. Procédé de pontage en imagerie numérique entre les éléments de contours disjoints d'une image numérique emmagasinés dans une mémoire numérique obtenus par un suivi de points de l'image ayant un gradient de luminance constrasté par rapport à un niveau de seuil prédéterminé, caractérisé par la recherche d'un chemin optimal de pontage entre les extrémités en regard des éléments de contours disjoints, et consistant : à définir une fenêtre de recherche (F) entre chacune des extrémités en regard (A, B) des éléments de contours disjoints ladite fenêtre (F) étant définie au moyen d'un carré de côté D égal à la distance séparant lesdits points A et B et orienté dans le plan de sorte que les points A et B soient disposés sur deux côtés opposés du carré au milieu de ceux-ci à considérer dans la fenêtre (F) les différents points d'image comme des noeuds dans un graphe, à déterminer (1, ... , 8) un coût élémentaire associé à chaque chemin reliant chaque noeud à ses noeuds voisins à partir des informations d'amplitude et/ou d'orientation de la fonction de luminance utilisée pour détecter les contours, et à déterminer le chemin optimal en suivant à partir des coûts obtenus une ligne de coût minimum pour laquelle le gradient de luminance des points détectés apparaît maximal, chaque coût élémentaire $C_{ij}$ pour aller d'un noeud i à un noeud j de la fenêtre étant défini par une relation du type

$$C_{ij} = \text{Max} - a_j$$

où Max désigne l'amplitude maximum du gradient dans la fenêtre (F) et $a_j$ désigne l'amplitude du gradient au noeud j.

2. Procédé selon la revendication 1, caractérisé en ce que le chemin optimal est également déterminé en fonction de l'orientation locale du chemin trouvé en chaque noeud j du graphe pour faire intervenir dans le coût la forme du chemin désiré.

3. Procédé selon la revendication 2, caractérisé en ce que pour favoriser un chemin rectiligne chaque coût élémentaire $C_{ij}$ est défini par une relation du type

$$C_{ij} = \text{Max} - a_j + K_1 \cdot |\theta_j - \theta_{moy}|$$

ou encore

$$C_{ij} = \text{Max} - \frac{a_j}{K_2 \cdot Q}$$

avec $Q = |\theta_j - \theta_{moy}|$ si $\theta_j \neq \theta_{moy}$ ou

$$Q = \frac{1}{K_2}$$

si $\theta_k = \theta_{moy}$ ,

$\theta_j$ et $\theta_{moy}$ désignant respectivement l'orientation locale au noeud j et $\theta_{moy}$ la moyenne des orientations locales aux extrémités A et B.

4. Procédé selon la revendication 2, caractérisé en ce que pour définir un chemin où l'orientation locale peut varier progressivement chaque coût élémentaire $C_{ij}$ est défini par une relation du type

$$C_{ij} = \text{Max} - \frac{aj}{K_2 \cdot Q}$$

si $\theta_j \neq \theta_i$
$Q = |\theta_j - \theta_i|$
sinon

$$Q = \frac{1}{K_2} \cdot$$

5. Procédé selon l'une quelconque des revendications 1 à 4, caractérisé en ce qu'il consiste lorsqu'un chemin optimal de pontage a été trouvé à effectuer un test (13) d'acceptabilité consistant à retenir le chemin que si le coût rapporté au nombre de points du chemin est inférieur à un seuil prédéterminé.

6. Procédé selon l'une quelconque des revendications 1 à 4, caractérisé en ce qu'il consiste lorsqu'un chemin optimal de pontage a été trouvé à effectuer un test d'accessibilité en calculant sur le chemin trouvé L un critère de qualité $C_r$ défini par la relation

$$C_r = \frac{\sum \frac{A_i \cdot N^1}{a_{max}}}{L}$$

avec $A_i$ = amplitude corrigée par l'orientation $A_i = \text{Max} - C_{ij}$ du gradient de luminance au point i du chemin

N = nombre de points du chemin

$a_{max}$ = amplitude maximale du gradient sur le chemin

et en effectuant un pontage si $C_r$ est supérieur à un seuil prédéterminé.

7. Utilisation du procédé selon l'une quelconque des revendications 1 à 6 dans les procédés de recherche de contour dans une image.

8. Utilisation du procédé selon l'une quelconque des revendications 1 à 7 pour la reconnaissance de vaisseaux en angiographie numérique.

**Claims**

1. A method for forming bridges between disjoint contour elements of a digital picture, for use in digital image processing, the elements being stored in a digital memory and being obtained by linking up points of an image having a contrasting luminence gradient relative to a predetermined threshold level, characterized in the retrieval of an optimum bridging path between the facing end points of the disjoint contour elements, the method consisting: in defining a retrieval window (F) between each of the facing end points (A, B) of the disjoint contour elements, said window (F) being defined by means of a square having side lengths D equal to the distance which separates said points A and B, and being oriented within the plane in such a way that the points A and B are disposed on two opposite sides of the square in the middle of the sides; in considering the different image points within the window (F) as nodes of a graph; in determining an elementary cost amount (1, .., 8) associated with each path that connects each node to its adjacent nodes on the basis of information relating to the amplitude and/or the orientation of the luminence function used for detecting the contours; and in determining the optimum path from the obtained costs by following a minimum cost line, for which the luminence gradient of the detected points appears to be maximum, with each elementary cost Cij needed for going from some point i to some point j of the window being defined by an equation of the type

$$C_{ij} = \text{Max} - a_j$$

wherein Max designates the maximum amplitude of the gradient in the window (F) and $a_j$ designates the amplitude of the gradient at the node j.

2. A method according to claim 1, characterized in that the optimum path is also determined as a function of the local orientation of the retrieved path at each node j of the graph, in order to have the shape of the path intervene in the cost.

3. A method according to claim 2, characterized in that in order to favour a rectilinear path, each elementary cost amount $C_{ij}$ is defined by an equation of the type

$$C_{ij} = Max - a_j + K_1 \cdot |\theta_j - \theta_{moy}|$$

or else

$$C_{ij} = Max - \frac{a_j}{K_2 \cdot Q}$$

with
$Q = |\theta_j - \theta_{moy}|$ if $\theta_j \neq \theta_{moy}$ or

$$Q = \frac{1}{K_2}$$

if $\theta_k = \theta_{moy}$,

$\theta_j$ and $\theta_{moy}$ designating respectively the local orientation at the node j and the average of the local orientations at the end points A and B.

4. A method according to claim 2, characterized in that in order to define a path whereof the local orientation may vary progressively, each elementary cost amount $C_{11}$ is defined by an equation of the type

$$C_{ij} = Max - \frac{aj}{K_2 \cdot Q}$$

if $\theta_j \neq \theta_i$
$Q = |\theta_j - \theta_i|$
if not: $Q = 1/K_2$.

5. A method according to any one of claims 1 to 4, characterized in that it consists in case where an optimum bridging path has been found in performing an acceptability test (13) so as to retain the path only if the cost aportioned to the number of points of the path is less than a predetermined threshold.

6. A method according to any one of claims 1 to 4, characterized in that it consists in case where an optimum bridging path has been found in performing an acceptability test (13) by calculating a quality criterion $C_r$ on behalf of the retrieved path L, which is defined by the equation

$$C_r = \sum \frac{A_i \cdot N^1}{L \quad a_{max}}$$

wherein
$A_i$ = the amplitude as being corrected by the orientation $A_i = Max-C_{ij}$ of the luminence gradient at point i of the path,
N = number of points of the path
$a_{max}$ = the maximum amplitude of the gradient along the path,
and in forming a bridge if $C_r$ is greater than a predetermined threshold.

7. The use of the method according to any one of claims 1 to 6 in the methods for retrieving contours in an image.

8. The use of the method according to any one of claims 1 to 6 for recognizing vessels in digital angiography.

**Patentansprüche**

1. Verfahren zur Brückenbildung im Rahmen der digitalen Bildverarbeitung zwischen den nicht miteinander verbundenen Konturelementen eines in einem digitalen Speicher gespeicherten digitalen Bildes, das durch Aneinanderhängen der Bildpunkte erhalten wird, die einen in Bezug auf einen vorbestimmten Schwellenpegel kontrastierenden Helligkeitsgradienten besitzen, gekennzeichnet durch die Suche nach einem optimalen Brückenpfad zwischen den einander gegenüberliegenden Endpunkten der Konturelemente, und darin bestehend, daß ein Suchfenster (F) zwischen jedem der einander gegenüberliegenden Endpunkte (A, B) der nicht miteinander verbundenen Konturelemente definiert wird, wobei das Fenster (F) durch ein Quadrat definiert wird, das eine dem Abstand zwischen den Endpunkten A und B entsprechenden Seitenlänge D besitzt und das in der Ebene so orientiert ist, daß sich die Endpunkte A und B auf zwei einander gegenüberliegenden Seiten des Quadrats in der Mitte der Seiten befinden, daß im Fenster (F) die verschiedenen Bildpunkte als Knoten eines Diagramms angesehen werden, daß ein Elementaraufwand (1, ..., 8) bestimmt wird, welcher jedem Pfad, der jeden Knoten mit seinen Nachbarknoten verbindet, zugeordnet wird, wobei die Bestimmung auf der Basis von Amplituden- und/oder Orientierungsinformationen über die für die Erfassung der Konturen benutzte Helligkeitsfunktion beruht, und daß der optimale Pfad auf der Basis der erhaltenen Aufwandsgrößen durch Verfolgen einer Minimalaufwandslinie bestimmt wird, für die der Helligkeitsgradient der erfaßten Punkte maximal erscheint, wobei jeder Elementaraufwand Cij, der benötigt wird, um vom Knoten i zum Knoten j des Fensters zu gehen, durch eine Beziehung vom Typ:

$$C_{ij} = \text{Max} - a_j$$

definiert ist, in der Max die Maximalamplitude des Gradienten im Fenster (F) und $a_j$ die Amplitude des Gradienten im Knoten j bedeuten.

2. Verfahren nach Anspruch 1, dadurch gekennzeichnet, daß der optimale Pfad ebenfalls in Abhängigkeit von der örtlichen Orientierung des in jedem Knoten j des Diagramms gefundenen Pfades bestimmt wird, um die Form des gewünschten Weges beim Aufwand zu berücksichtigen.

3. Verfahren nach Anspruch 2, dadurch gekennzeichnet, daß zur Begünstigung eines geraden Pfades jeder Elementaraufwand $C_{ij}$ durch eine Beziehung vom Typ

$$C_{ij} = \text{Max} - a_j + K_1 \cdot |\theta_j - \theta_{moy}|$$

oder auch

$$C_{ij} = \text{Max} - \frac{a_j}{K_2 \cdot Q}$$

definiert wird, wobei
$Q = |\theta_j - \theta_{moy}|$ wenn $\theta_j \neq \theta_{moy}$ oder

$$Q = \frac{1}{K_2}$$

wenn $\theta_k = \theta_{moy}$ ,
   $\theta_j$ und $\theta_{moy}$ die örtliche Orientierung im Knoten j bzw. $\theta_{moy}$ den Mittelwert der örtlichen Orientierung in den Endpunkten A und B bezeichnen.

4. Verfahren nach Anspruch 2, dadurch gekennzeichnet, daß zum Definieren eines Pfades, bei dem sich die örtliche Orientierung progressiv verändern kann, jeder Elementaraufwand $C_{ij}$ durch eine Beziehung vom Typ definiert wird

$$C_{ij} = \text{Max} - \frac{a_j}{K_2 \cdot Q}$$

falls $\theta_j \neq \theta_i$
$Q = |\theta_j - \theta_i|$
und ansonsten ist: $Q = 1/K_2$.

5. Verfahren nach einem beliebigen der Ansprüche 1 bis 4 dadurch gekennzeichnet, daß nach Auffinden eines optimalen Brückenbildungspfades ein Annehmbarkeitstest (13) durchgeführt wird, bei dem der Pfad nur dann infragekommt, wenn der auf die Anzahl der Punkte des Weges umgelegte Aufwand kleiner als ein vorbestimmter Schwellenwert ist.

6. Verfahren nach einem beliebigen der Ansprüche 1 bis 4, dadurch gekennzeichnet, daß nach Auffinden eines optimalen Brückenbildungspfades ein Annehmbarkeitstest (13) durchgeführt wird, bei dem für den gefundenen Weg L ein Qualitätskriterium $C_r$ berechnet wird, das durch die Beziehung:

$$C_r = \sum_L \frac{A_i \cdot N^l}{a_{max}}$$

definiert ist, wobei:
$A_j$ = eine durch die Orientierung $A_i = \text{Max}-C_{ij}$ des Helligkeitsgradienten im Punkte i des Weges korrigierte Amplitude ist,
N = die Anzahl der Punkte des Weges ist,
$a_{max}$ = die Maximalamplitude des Gradienten auf dem Pfad ist,
und wobei eine Brückenbildung erfolgt, wenn $C_r$ größer als ein vorbestimmter Schwellenwert ist.

7. Verwendung des Verfahrens gemäß einem beliebigen der Ansprüche 1 bis 6 in den Verfahren zur Konturensuche in einem Bild.

8. Verwendung des Verfahrens gemäß einem beliebigen Anspruch 1 bis 6 zur Gefäßerkennung in der digitalen Angiographie.

## Fig.1

## Fig.2A

## Fig.2B

## Fig.3

$$S = \{A\}$$
$$\underline{S} = \{2, ...., N\}$$
$$M(A) = 0$$
$$P_{(i)} = A$$
$$M_i = C_{Ai}$$

1

$$M_{(j)} = \min(M_{(i)})$$

2

$$j = B$$

3   non

FIN

4

$$\underline{S} \leftarrow \underline{S} - \{j\}$$

5

$$M_{(i)} \leftarrow \min(M_{(i)}, M_{(j)} + C_{ji})$$

6

$$M_{(i)} - \min(M_{(i)}, M_{(j)} + C_{ji}) \neq 0$$

7

oui        non

$$P_i = j$$

8

DÉBUT

IMAGES DES CONTOURS, DES AMPLITUDES ET DES DIRECTIONS DU GRADIENT ~10

SÉLECTION DES EXTRÉMITÉS DE LIGNES CANDITATES ~11

PROCÉDURE DE PONTAGE ~12

CHEMIN ACCEPTABLE ? ~13

FIN

Fig.4